# EUROPEAN PATENT APPLICATION

(11) **EP 2 498 361 A1**
(43) Date of publication of application: **12.09.2012**
(21) Application number: 10827978.7
(22) Date of filing: 28.10.2010
(51) Int. Cl.: H02J 3/00, H01M 10/44, H01M 10/48, H02J 3/46

(54) **POWER DISTRIBUTION SYSTEM FOR BUILDING AND PROTECTION METHOD FOR MAIN LINE THEREOF**

(30) Priority: 06.11.2009 JP 2009255404
(71) Applicant: Panasonic Corporation, Kadoma-shi Osaka 571-8501 (JP)
(72) Inventor: SHIKATA, Yoshikazu, Osaka 540-6207 (JP); KOSHIN, Hiroaki, Osaka 540-6207 (JP)
(74) Representative: Haydn, Christian
(86) International application number: PCT/IB2010/002748
(87) International publication number: WO 2011/055195

(57) **Abstract**

A power distribution system for a building includes an electric current sensor for detecting a value of a current flowing from a commercial AC power source through a main line in a building and a storage battery installed in the building. When the current value detected by the electric current sensor reaches a predetermined value, a supply of an electric power to the building from the storage battery is initiated. The power distribution system further includes an overcurrent protection unit. The building includes sections individually equipped with electric power supply systems, and the overcurrent protection unit protects the main line of the building from an overcurrent by initiating the supply of the electric power from the storage battery to the building when the current value detected by the electric current sensor becomes equal to or greater than a predetermined current value for the initiation of main line protection.

## Description

### Field of the Invention

The present invention relates to a power distribution system for a building such as a public housing or a rental housing and a protection method for a main line thereof.

### Background of the Invention

As described in Patent Documents 1 and 2, in a building such as a mansion or a tenant building, an electric power is distributed to each dwelling unit or each tenant via a main line which is wired to pass through each floor. The main line is branched into electric power distribution lines in each floor, so that the electric power can be distributed to each dwelling unit or each tenant via the electric power distribution lines.
Patent Document 1: Japanese Patent Application Publication No. 2008-178275
Patent Document 2: Japanese Patent Application Publication No. 2009-124846

In this power distribution system for a building, when a power consumption of the entire building is increased, a current flowing through the main line may exceed a rated current. If the current flowing through the main line exceeds the rated current, a part of breakers provided at the building is shut down to stop a supply of the electric power, so that the main line is protected from overcurrent. However, until the main line is recovered, the electricity cannot be used at the location where the supply of electric power is stopped, which causes inconvenience to residents.

### Summary of the Invention

In view of the above, the present invention provides a power distribution system for a building and a protection method for a main line thereof, capable of properly preventing an overcurrent in a main line without stopping a supply of an electric power.

In accordance with an aspect of the present invention, there is provided a power distribution system for a building, including: an electric current sensor for detecting a current value of an electric current flowing from a commercial AC power source through a main line in a building; and a storage battery installed at the building. When the current value detected by the electric current sensor reaches a predetermined value, a supply of an electric power to the building from the storage battery is initiated.

The power distribution system further includes an overcurrent protection unit. The building includes a plurality of sections individually equipped with electric power supply systems, and the overcurrent protection unit protects the main line of the building from an overcurrent by initiating the supply of the electric power from the storage battery to the building when the current value detected by the electric current sensor becomes equal to or greater than a predetermined current value for the initiation of main line protection.

In this configuration, when the current flowing from the commercial AC power source to the main line becomes equal to or greater than a main line protection initiation current value, the main line protection control is initiated, so that the supply of an electric power from the storage battery installed at the building is initiated.

When the supply of the electric power from the storage battery is initiated, a part of the electric power that has been supplied entirely from the commercial power source is, in turn, supplied from the storage battery, and the current flowing from the commercial AC power source to the main line is reduced. The reduced supply amount of the electric power from the commercial AC power source can be compensated by the supply amount of the electric power from the storage battery.

Therefore, the total supply amount of electric power after initiation of the protection control can be maintained at the same level as that before the initiation of the protection control. Accordingly, with such configuration, the overcurrent of the main line can be properly protected without stopping the supply of the electric power.

Further, the storage battery may be provided at a side of the main line which is opposite to a side where the commercial AC power source is provided, and the overcurrent protection unit may initiate the supply of the electric power from the storage battery to the building.

In this configuration, when the current flowing from the commercial AC power source to the main line becomes equal to or greater than the main line protection initiation current value, the protection control of the main line is initiated, so that the current flows to the main line from the storage battery connected to the side of the main line which is opposite to the side where the commercial AC power source is provided.

When the supply of the electric power from the storage battery is initiated, a part of the electric power that has been supplied entirely from the commercial AC power source is, in turn, supplied from the storage battery, and the current flowing from the commercial AC power source to the main line is reduced. The reduced supply amount of the electric power from the commercial AC power source is compensated by the supply amount of the electric power from the storage battery, so that the total supply amount of electric power after initiation of the protection control can be maintained at the same level as that before the initiation of the protection control. Hence, with such configuration, the overcurrent of the main line can be properly protected without stopping the supply of the electric power.

Further, the storage battery may be provided at each of the sections, and the overcurrent protection unit may initiate the supply of the electric power from the storage battery to the main line in the building.

In this configuration, when the current flowing from the commercial AC power source to the main line becomes equal to or greater than the main line protection initiation current value, the protection control of the main line is initiated, and the supply of an electric power from the storage battery installed at the dwelling unit or the tenant in the building is initiated.

When the supply of the electric power from the storage battery is initiated, a part of the electric power that has been supplied entirely from the commercial AC power source is, in turn, supplied from the storage battery, and the current flowing from the commercial AC power source to the main line is reduced. The reduced supply amount of the electric power from the commercial AC power source is compensated by the supply amount of the electric power from the storage battery, so that the total supply amount of electric power after initiation of the protection control can be maintained at the same level as that before initiation of the protection control. Hence, with such configuration, the overcurrent of the main line can be properly protected without stopping the supply of the electric power.

Further, the power distribution system may further include a storage battery current sensor for detecting a current value of an electric current supplied from the storage battery and a release unit for stopping the supply of the electric power from the storage battery which is carried out by the overcurrent protection unit when the sum of the current values detected by the electric current sensor and the storage battery current sensor becomes equal to or lower than a predetermined current value for the release of main line protection.

In this configuration, after the initiation of the supply of the electric power from the storage battery, the supply of the electric power from the storage battery to the main line is stopped when the total current value of the current supplied from the commercial AC power source and the current supplied from the storage battery becomes equal to or lower than the predetermined current value for the release of main line protection. Therefore, the protection control of the main line carried out by the supply of the electric power from the storage battery can be released after confirming that the supply of the electric power from the commercial AC power source does not become excessive even after stopping the supply of the electric power from the storage battery. Further, in order to reliably prevent the occurrence of the overcurrent after the release of the protection control, it is preferable to set the current value for the release of main line protection to be lower than the current value for the initiation of main line protection.

Further, the current value for the release of the main line protection may be set to be different by a predetermined constant value from the current value for the initiation of the main line protection.

In this configuration, the main line protection release current value is set to be different by a predetermined constant value from the main line protection initiation current value. Accordingly, the supply of the electric power from the storage battery is not stopped unless the total value of the current supplied from the commercial AC power source and the current supplied from the storage battery is sufficiently lower than the current value for the initiation of main line protection. Hence, the hunting of the protection control, i.e., the resumption of the main line protection control immediately after the release of the main line protection control, can be properly prevented.

In accordance with another aspect of the present invention, there is provided a method for protecting a main line of a building from an overcurrent in a power distribution system for distributing an electric power to each floor of the building via the main line which is wired to pass through each floor of the building, the method including: detecting a current value of an electric current flowing from a commercial power source through the main line; and initiating a supply of an electric power to the building from a storage battery installed at the building when the detected current value becomes equal to or greater than a predetermined current value for the initiation of main line protection.

In this protection method, when the current flowing from the commercial AC power source to the main line becomes equal to or greater than the main line protection initiation current value, the protection control of the main line is performed, so that the supply of an electric power from the storage battery installed at the building is initiated.

When the supply of the electric power from the storage battery is initiated, a part of the electric power that has been supplied entirely from the commercial AC power source is supplied from the storage battery and, thus, the current flowing from the commercial AC power source to the main line is reduced. At this time, the reduced supply amount of the electric power from the commercial AC power source is compensated by the supply amount of the electric power from the storage battery, so that the total supply amount of electric power after initiation of the protection control can be maintained at the same level as that before initiation of the protection control. Hence, with such protection method, the main line can be properly protected from an overcurrent without stopping the supply of the electric power.

### Brief Description of the Drawings

The objects and features of the present invention will become apparent from the following description of embodiments, given in conjunction with the accompanying drawings, in which:
Fig. 1 is a block diagram schematically showing an entire configuration of a power distribution system in accordance with an embodiment of the present invention;
Fig. 2 is a block diagram schematically showing a configuration of a power supply system installed at each dwelling unit of a residential complex in the embodiment of the present invention;
Fig. 3 is a block diagram schematically showing a configuration of a general control unit in the embodiment of the present invention;
Fig. 4 is a block diagram schematically showing a configuration of a storage battery control unit in the embodiment of the present invention;
Fig. 5 is a block diagram schematically showing configurations of an AC power distribution board and a home control unit in the embodiment of the present invention; and
Fig. 6 is a flowchart showing a processing sequence of the general control unit in a main line protection control routine employed in the embodiment of the present invention.

### Detailed Description of the Embodiments

Hereinafter, embodiments of the present invention will be described with reference to the accompanying drawings which form a part hereof. Throughout the drawings, like reference numerals will be given to like parts, and redundant description thereof will be omitted.

### (First embodiment)

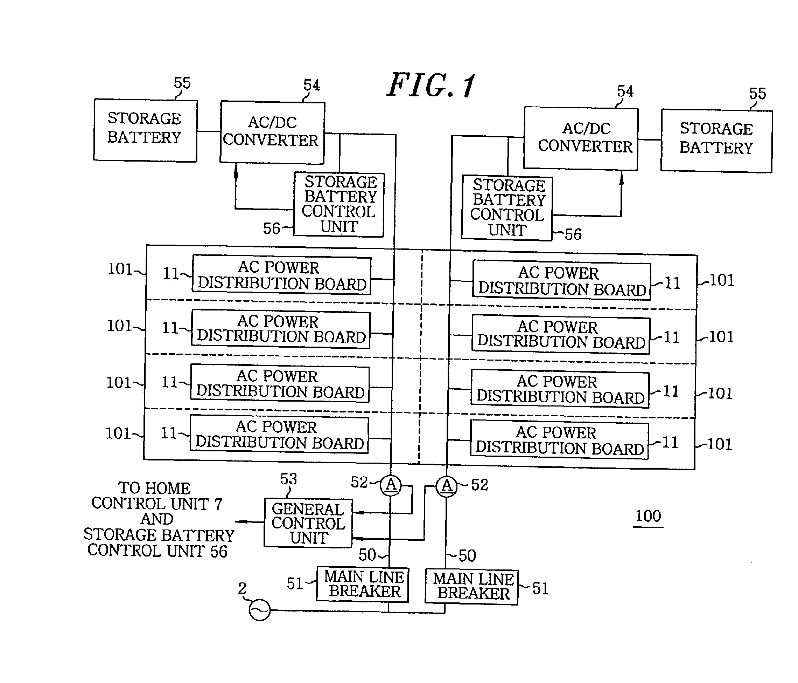

Hereinafter, a power distribution system for a building and a protection method for a main line of the power distribution system in accordance with a first embodiment of the present invention will be described in detail with reference to Figs. 1 to 6. In the following description, the present invention is applied to a residential complex having a plurality of dwelling units. However, the present invention is not limited thereto, and the residential complex may refer to, e.g., a building having one or more floors equipped with respective power supply systems, each floor having a plurality of sections.

Fig. 1 shows a schematic configuration of a power distribution system for a building in accordance with the first embodiment of the present invention.

In a residential complex 100 shown in Fig. 1, a main line 50 is wired to pass through each floor thereof. The main line 50 is branched into power distribution lines in each floor, and the power distribution lines are connected to AC power distribution boards 11 of dwelling units 101, respectively. Further, a main line breaker 51 that interrupts an electric current when the current flowing through the main line 50 exceeds a rated current is installed at an inlet portion where the main line 50 is introduced to the building.

Moreover, a current sensor 52 for monitoring a value of an electric current flowing from a commercial AC power source to the main line 50 is provided at the inlet portion of the main line 50. The detection signals of the current sensors 52 are inputted to a general control unit 53 for controlling an entire power distribution of the residential complex 100.

Further, a storage battery 55 is connected to an outlet portion (e.g., an uppermost portion in the present embodiment) of the main line 50 via an AC/DC converter 54. The charging and discharging of the storage battery 55 is performed by controlling the AC/DC converter 54 by a storage battery control unit 56.

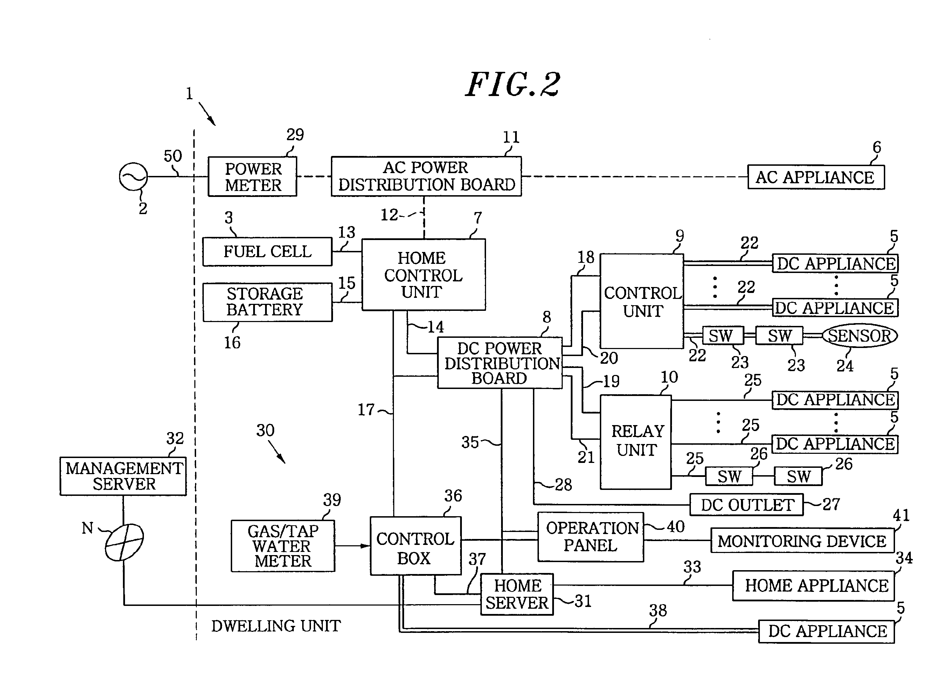

Fig. 2 shows a schematic configuration of a power supply system installed at each dwelling unit 101 of the residential complex 100.

As shown in Fig. 2, each dwelling unit 101 of the residential complex 100 is equipped with a power supply system 1 for supplying an electric power to various kinds of appliances such as a lighting device, an air conditioner, a home appliance, an audiovisual device and the like. The power supply system 1 supplies, as a power source, the commercial AC power through the main line 50 to operate various kinds of appliances. Further, the power supply system 1 supplies, as a power source, an electric power generated from a fuel cell 3 by using a reverse reaction of electrolysis of water or an electric power generated from a solar cell (not shown) to various kinds of appliances. The power supply system 1 supplies the electric power not only to a DC appliances 5 operated with DC power inputted thereto but also to an AC appliances 6 operated with the AC power inputted thereto.

The power supply system 1 includes a home control unit 7 and a DC power distribution board 8(having a DC breaker installed therein). Further, the power supply system 1 includes a control unit 9 and a relay unit 10 for controlling operations of the DC appliances 5 in each dwelling unit.

The AC power distribution board 11 for distributing the AC power is connected to the home control unit 7 via an AC power line 12. The home control unit 7 is connected to the commercial AC power source 2 via the AC power distribution board 11 and also connected to the fuel cell 3 via a DC power line 13. The home control unit 7 acquires the AC power through the AC power distribution board 11 and a DC power from the fuel cell 3 and converts the acquired power into a specified DC power as a power source of the appliances. Moreover, the home control unit 7 outputs the converted DC power to the DC power distribution board 8 via a DC power line 14 or to a storage battery 16 via a DC power line 15 so as to be stored therein.

The home control unit 7 not only acquires the AC power through the AC power distribution board 11 but also supplies the AC power to the AC power distribution board 11 by converting the DC power from the fuel cell 3 or the storage battery 16 into the AC power. The home control unit 7 exchanges data with the DC power distribution board 8 through a signal line 17.

The DC power distribution board 8 is a kind of a breaker for DC power. The DC power distribution board 8 distributes the DC power inputted from the home control unit 7 and outputs the distributed DC power to the control unit 9 via a DC power line 18 or to the relay unit 10 via a DC power line 19. Further, the DC power distribution board 8 exchanges data with the control unit 9 via a signal line 20 or with the relay unit 10 via a signal line 21.

A plurality of DC appliances 5 is connected to the control unit 9. The DC appliances 5 are connected to the control unit 9 via DC supply lines 22 each of which has a pair of lines capable of transmitting both of the DC power and data therethrough. The electric power and the data are transmitted to the DC appliances 5 through the respective DC supply lines 22 by virtue of so-called power line communications in which communications signals for transmitting data with high-frequency carrier waves are overlapped with the DC power to be supplied to the DC appliances 5 by using a pair of lines. The control unit 9 acquires the DC power for the DC appliances 5 via the DC power line 18 and determines which of the DC appliances 5 is to be controlled in what manner based on an operation instruction obtained from the DC power distribution board 8 via a signal line 20. Further, the control unit 9 outputs a DC voltage and the operation instruction to the designated DC appliances 5 via the corresponding DC supply line 22, thereby controlling the operations of the DC appliances 5.

Switches 23 that are manipulated to switch operations of the DC appliances 5 are connected to the control unit 9 via the DC supply line 22. Moreover, a sensor 24 for detecting a radio wave transmitted from, e.g., an infrared remote controller is connected to the control unit 9 via the DC supply line 22. Thus, the DC appliances 5 are controlled by transmitting communications signals through the DC supply lines 22 in response to the manipulation of the switches 23 and the detection of the sensor 24 as well as the operation instruction from the power distribution board 8.

The DC appliances 5 are connected to the relay unit 10 via respective DC power lines 25. The relay unit 10 acquires the DC power for the DC appliances 5 via the DC power line 19 and determines which of the DC device 5 is to be operated based on the operation instruction obtained from the DC power distribution board 8 via the signal line 21.

Further, the relay unit 10 controls the operation of the designated DC appliances 5 in such a way that the relays installed therein turn on and off the supply of electric powers to the DC power lines 25. Moreover, switches 26 for use in manually switching the operations of the DC appliances 5 are connected to the relay unit 10. Accordingly, the DC appliances 5 are controlled by manually manipulating the switches 26 to cause the relays to turn on and off the supply of electric powers to the DC power lines 25.

A DC outlet 27 installed in each dwelling unit in the form of, e.g., a wall outlet or a floor outlet is connected to the DC power distribution board 8 via a DC power line 28. When a plug (not shown) of one of the DC appliances 5 is inserted in the DC outlet 27, it becomes possible to directly supply the DC power to the corresponding DC appliance.

Besides, a power meter 29 capable of remotely measuring an amount of usage of an electric power from the commercial power source 2 is connected between the commercial AC power source 2 and the AC power distribution board 11. In addition to the function of remotely measuring the amount of usage of the electric power from the commercial power source, the power meter 29 also has a function of, e.g., power line communications or wireless communications. The power meter 29 transmits the measurement results to an electric power company or the like through the power line communications, the wireless communications or the like.

The power supply system 1 includes a network system 30 that makes it possible to control various kinds of home appliances through network communications. The network system 30 is provided with a home server 31 serving as a control unit thereof. The home server 31 is connected to a management server 32 outside home via a network N such as Internet or the like, and also connected to a home appliance 34 via a signal line 33. Moreover, the home server 31 is operated by using, as a power source, the DC power obtained through the DC power distribution board 8 via a DC power line 35.

A control box 36 for managing the operation control of various kinds of home appliances through network communications is connected to the home server 31 via a signal line 37. The control box 36 is connected to the home control unit 7 and the DC power distribution board 8 via a single line 17, and can directly control the DC appliances 5 via a DC supply line 38. The control box 36 is connected to, e.g., a gas/tap water meter 39 capable of remotely reading, e.g., gas usage or water usage, and also connected to a operation panel 40 of a network system 30. The operation panel 40 is connected to a monitoring device 41 formed of, e.g., a door phone extension unit, a sensor or a camera.

When operation instructions for various kinds of home appliances are inputted through the network N, the home server 31 informs the control box 36 of the instructions and allows the control box 36 to control the home appliances to be operated based on the instructions. Further, the home server 31 can provide various kinds of information acquired from the gas/tap water meter 39 to the management server 32 through the network N. Upon receiving abnormality detection information from the monitoring device 41 through the operation panel 40, the home server 31 provides an information reception notice to the management server 32 through the network N.

As described above, in the residential complex 100, the entire power distribution control is performed by the general control unit 53.

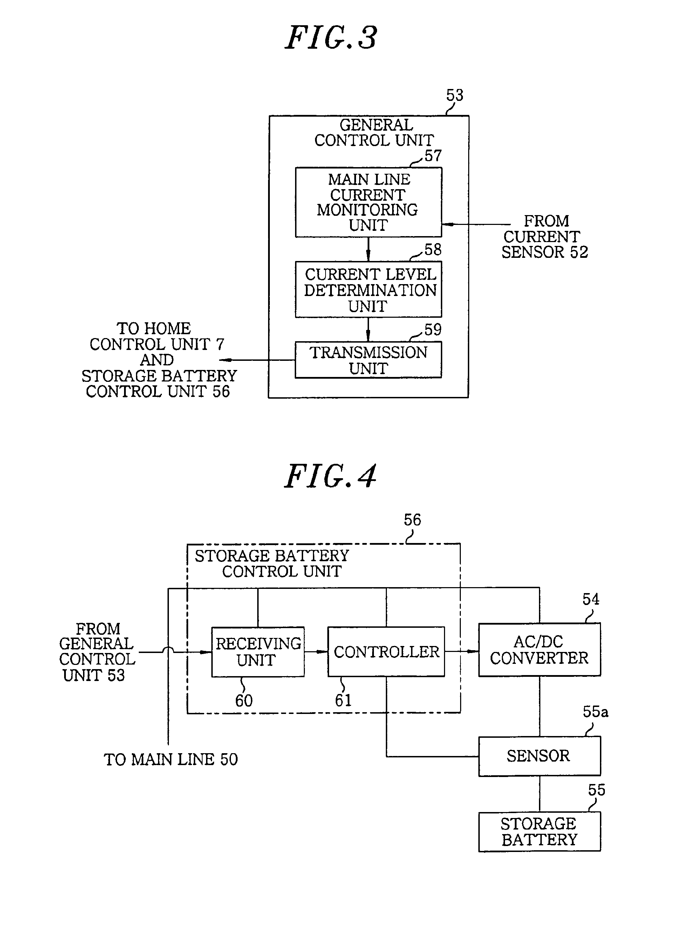

Fig. 3 shows a configuration of the general control unit 53. As shown in Fig. 3, the general control unit 53 includes a main line current monitoring unit 57 for monitoring an electric current value at the inlet portion of the main line 50 which is detected by the current sensors 52. The general control unit 53 further includes a current level determination unit 58 for determining whether or not the electric current value at the inlet portion of the main unit 50 is excessive and a transmission unit 59 for transmitting an instruction signal to the home control unit 7 of each dwelling unit 101 based on the determination result.

Fig. 4 shows a configuration of the storage battery control unit 56 for controlling the storage battery 55 connected to a side of the main line 50 which is opposite to a side where the commercial AC power source is provided.

As shown in Fig. 4, the storage battery control unit 56 includes a receiving unit 60 for receiving an instruction signal from the general control unit 53 and a controller 61 for controlling an operation of the AC/DC converter 54 based on the received instruction signal.

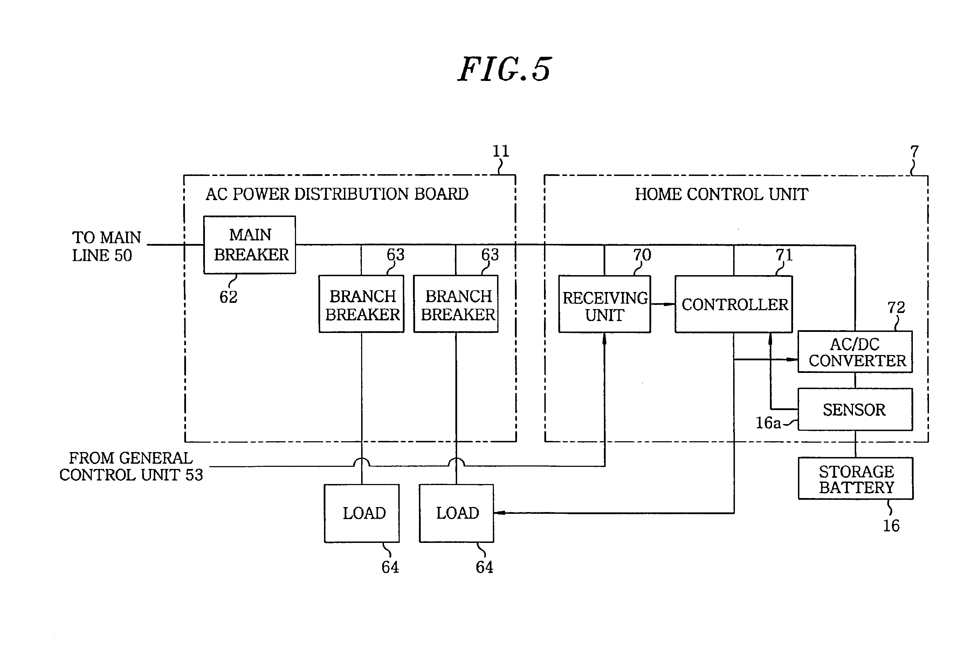

Fig. 5 shows configurations of the home control unit 7 and the AC power distribution board 11 which are installed in each dwelling unit 101.

As shown in Fig. 5, the AC power distribution board 11 has a main breaker 62 and a plurality of branch breakers 63. The main breaker 62 serves as a breaker that cuts off an electric connection between the main line 50 and the power supply system 1 when the current supplied from the main line 50 becomes excessive. The branch breakers 63 serve as breakers that cut off the supply of electric power to each of AC loads provided in each dwelling unit when necessary. The AC loads may be various kinds of AC electrical appliances such as a lighting device, an air conditioner, a home appliance, an audio/visual device and the like.

Meanwhile, the home control unit 7 has a receiving unit 70 for receiving an instruction signal from the general control unit 53, and a controller 71. The controller 71 controls operations of the loads 64 based on the instruction signal received by the receiving unit 70. The controller 71 controls an operation of an AC/DC converter 72 and further controls charging/discharging of the storage battery 16 based on the instruction signal received by the receiving unit 70.

In the power distribution system for a building in accordance with the present embodiment which is configured as described above, when an overcurrent in the main line 50 is detected, the main line protection control for protecting the main line 50 from the overcurrent is performed. The main line protection control is carried out by initiating the supply of electric powers from the storage battery 16 installed at each dwelling unit 101 and also from the storage battery 55 connected to the side of the main line 50 which is opposite to the side where the commercial AC power source is provided.

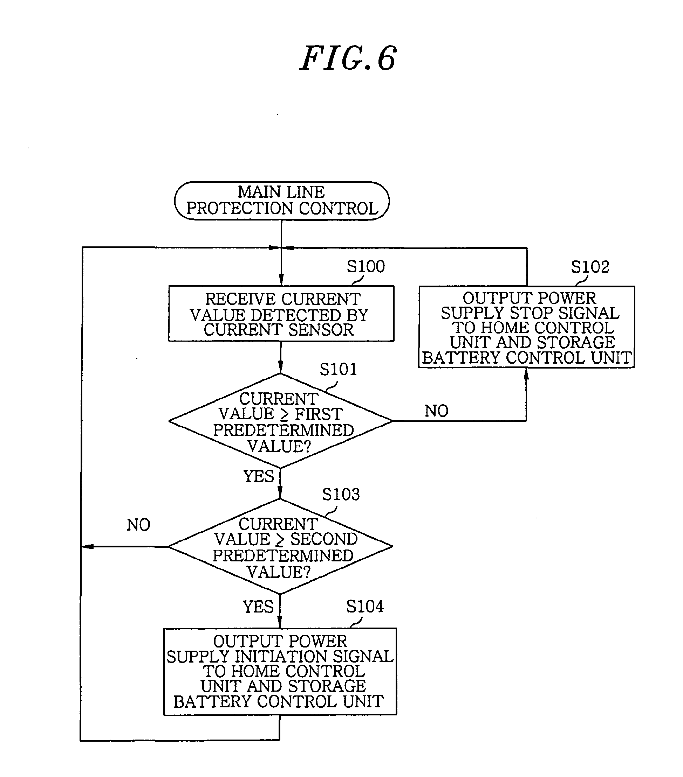

Fig. 6 shows a processing sequence of a main line protection control routine employed in the present embodiment. Further, the processing of this routine is repeatedly performed by the general control unit 53 from start to end.

When this routine is initiated, first, the general control unit 53 receives an electric current value detected by the current sensor 52 provided at the inlet portion of the main line 50 in step S100. In step S101, the general control unit 53 determines whether or not the current value detected by the current sensor 52 is equal to or greater than a first predetermined value. Moreover, in the present embodiment, the first predetermined value is set to, e.g., a current value corresponding to about 80% of a shutdown current of the main line breaker 51.

If it is determined that the current value detected by the current sensor 52 is less than the first predetermined value (NO in step S101), the general control unit 53 proceeds to step S102 and outputs a power supply stop signal to the home control unit 7 and the storage battery control unit 56 in step S102. After outputting the power supply stop signal, the general control unit 53 returns to step S100. When the power supply stop signal is received while the supply of electric power is being carried out, the home control unit 7 and the storage battery control unit 56 stop the supply of electric powers from the batteries 16 and 55.

On the other hand, when the current sensor 52 detects a current value equal to or greater than the first predetermined value (YES in step S101), the general control unit 53 proceeds to step S103 and determines whether or not the current value detected by the current sensor 52 is equal to or greater than a second predetermined value in step S103. In the present embodiment, the second predetermined value is set to, e.g., a current value corresponding to about 90% of a shutdown current of the main line breaker 51. In other words, in the present embodiment, step S103 corresponds to a step of monitoring a value of an electric current flowing from the commercial AC power source to the main line 50. Furthermore, in the present invention, the second predetermined value corresponds to the predetermined current value for the initiation of main line protection.

If it is determined that the current value detected by the current sensor 52 is less than the second predetermined value (NO in step S103), the general control unit 53 returns to step S100.

If it is determined that the current value detected by the current sensor 52 is equal to or greater than the second predetermined value (YES in step S103), the general control unit 53 transmits, in step S104, the power supply initiation signals which initiate the supply of electric powers from the batteries 16 and 55 to the home control unit 7 and the storage battery control unit 56. Upon completion of the transmission of the power supply initiation signals, the general control unit 53 returns to step S100. When the power supply initiation signals are received, the home control unit 7 and the storage battery control unit 56 initiate the supply of electric powers from the batteries 16 and 55 in response to the received signals. Moreover, in the present embodiment, step S104 corresponds to the following steps.
- a step in which the supply of electric powers from the batteries 16 and 55 installed at a building (a residential complex 100) into the building is initiated when the current value monitored in step S103 becomes equal to or greater than the predetermined current value for the initiation of main line protection.
- a step in which the supply of an electric power to the main line 50 from the storage battery 55 connected to a side of the main line 50 which is opposite to a side where the commercial AC power source is provided is initiated when the current value monitored in step S103 becomes equal to or greater than the predetermined current value for the initiation of main line protection.
- a step in which the supply of an electric power from the storage battery 16 installed at the dwelling unit 101 (tenant) to the main line 50 is initiated when the current value monitored in a step S103 becomes equal to or greater than the predetermined current value for the initiation of main line protection.

In the above-described embodiment, the residential complex 100 corresponds to the building. Further, in the above-described embodiment, the general control unit 53 performs the processes carried out by the protection unit.

The power distribution system for a building and a protection method for the main line of the power distribution system in accordance with the embodiment of the present invention can provide following effects.
(1) In the power distribution system for a building in accordance with the present embodiment, a commercial AC power is distributed to each floor of the residential complex 100 via the main line 50 which is wired to pass through each floor of the residential complex 100. Further, the power distribution system for a building of the present embodiment includes the current sensor 52 for detecting a value of an electric current flowing from the commercial AC power source to the main line 50, and the batteries 16 and 55 installed at the residential complex 100. Moreover, the general control unit 53 protects the main line 50 from an overcurrent by initiating the supply of electric powers from the batteries 16 and 55 to the residential complex 100 when a current value detected by the current sensor 52 becomes equal to or greater than a predetermined current value for the initiation of main line protection.

More specifically, the general control unit 53 protects the main line 50 by initiating the supply of an electric power to the main line 50 from the storage battery 55 connected to a side of the main line 50 which is opposite to a side where the commercial AC power source is provided. Further, the general control unit 53 protects the main line 50 by initiating the supply of an electric power from the storage battery 16 provided at each dwelling unit 101 to the main line 50. When the supply of the electric powers from the batteries 16 and 55 is initiated, a part of the electric power that has been entirely supplied from the commercial AC power source is, in turn, supplied from the batteries 16 and 55 and, thus, the current flowing from the commercial AC power source to the main line 50 is reduced.

At this time, since the reduced supply amount of electric power from the commercial AC power source is compensated by the supply amount of electric powers from the batteries 16 and 55, the total supply amount of electric powers after initiation of the protection control can be maintained at the same level as that before the initiation of the protection control.

Accordingly, in accordance with the above configuration, the main line can be properly protected from an overcurrent without stopping the supply of electric power.
(2) In the protection method for a main line of the power distribution system for a building in accordance with the present embodiment, the main line 50 is protected from an overcurrent by the following steps. At a first step, a value of an electric current flowing from the commercial AC power source to the main line 50 is monitored. At a second step, the supply of electric powers from the batteries 16 and 55 installed at the residential complex 100 into the residential complex 100 is initiated when the current value monitored at the first step becomes equal to or greater than a predetermined current value for the initiation of main line protection.

More specifically, at the second step, the supply of an electric power to the main line 50 from the storage battery 55 installed at a side of the main line 50 which is opposite to the side where the commercial AC power source is provided is initiated. Further, at the second step, the supply of an electric power from the storage battery 16 provided at each dwelling unit 101 is initiated. When the supply of the electric powers from the batteries 16 and 55 is initiated, a part of the electric power that has been supplied entirely from the commercial AC power source is supplied, in turn, from the batteries 16 and 55 and, thus, a current flowing from the commercial AC power source to the main line 50 is reduced.

At this time, since the reduced supply amount of the electric power from the commercial AC power source is compensated by the supply amount of electric powers from the batteries 16 and 55, the total supply amount of electric powers after initiation of the protection control can be maintained at the same level as that before the initiation of the protection control.

Accordingly, in accordance with the above configuration, the main line can be properly protected from an overcurrent without stopping the supply of electric power.

### (Second embodiment)

Hereinafter, there will be described a power distribution system for a building and a protection method for a main line of the power distribution system in accordance with a second embodiment of the present invention. The present embodiment is the same as the first embodiment except the conditions for stopping electric powers which are supplied from the batteries 16 and 55 for the protection of the main line 50.

In the first embodiment, when the current value at the inlet portion of the main line 50, which is detected by the current sensor 52, becomes lower than the first predetermined current value that is set to a current value corresponding to about 80% of a shutdown current of the main line breaker, the supply of electric powers from the batteries 16 and 55 for the protection of the main line 50 is stopped. In that case, if the supply of the electric powers from the batteries 16 and 55 is stopped, the current value at the inlet portion of the main line 50 is increased again. Thus, the supply of the electric powers from the batteries 16 and 55 needs to be resumed.

Accordingly, in the present embodiment, the main line protection control carried out by supplying electric powers from the batteries is released after confirming that the supply of the electric power from the commercial AC power source does not become excessive even after stopping the supply of the electric powers from the batteries 16 and 55.

Specifically, in the present embodiment, current sensors (other current sensors) for detecting the values of currents supplied from the batteries 16 and 55 are provided at the batteries 16 and 55, respectively. Further, when the sum of the current values from the batteries 16 and 55 detected by the current sensors and the current value at the inlet portion of the main line 50 detected by the current sensor 52 becomes equal to or lower than a predetermined current value for the release of main line protection, the supply of electric powers from the batteries 16 and 55 is stopped. Herein, the current value for the release of main line protection is set to be lower than the second predetermined value. Therefore, even when the supply of electric powers from the batteries 16 and 55 is stopped, the current flowing through the inlet portion of the main line 50 is lower than the second predetermined value.

Further, in the present embodiment, the supply of electric powers from the batteries 16 and 55 is stopped based on the instruction from the general control unit 53. Therefore, in the present embodiment, the general control unit 53 corresponds to a release unit for stopping the supply of electric power from the storage battery that is controlled by the protection unit when the sum of the current values detected by the current sensor and other current sensors becomes equal to or lower than the predetermined current value for the release of main line protection.

In this regard, in the present embodiment, the current value for release of main line protection is set to be different by a predetermined constant value from the current value for initiation of main line protection (the second predetermined value). Thus, after the supply of electric powers from the batteries 16 and 55 is initiated, the supply of the electric powers from the batteries 16 and 55 is not stopped unless the total value of the current supplied from the commercial AC power source and the currents supplied from the batteries 16 and 55 is sufficiently lower than the predetermined current value for the initiation of main line protection. Accordingly, the hunting of the protection control, i.e., the resumption of the protection control of the main line 50 immediately after the release of the protection control of the main line 50, can be properly prevented.

In addition, the above-described embodiments may be modified as follows.

In the second embodiment, there is set to be a constant hysteresis between the main line protection initiation current value (the second predetermined value) and the main line protection release current value. However, both current values may be the same when the control hunting of the protection control can be neglected.

In the above-described embodiments, when the current flowing through the inlet portion of the main line 50 becomes equal to or greater than the second predetermined value, the supply of electric power is initiated from both of the storage battery 16 installed at each dwelling unit 101 and the storage battery 55 connected to the side of the main line 50 which is opposite to the side where the commercial AC power source is provided.

However, if the main line 55 can be sufficiently protected by either one of the batteries, the protection control of the main line 50 can be performed by the supply of an electric power from either one of the batteries 55 and 16. Further, when the main line 50 can be protected by the storage battery 16 alone that is installed at each dwelling unit 101, the storage battery 55 or the storage battery control unit 56 can be omitted. In addition, when the main line 50 is protected by the storage battery 55 alone, it is unnecessary to provide the storage battery 16 at each dwelling unit 101.

The above-illustrated embodiments have described the cases in which the present invention is applied to the residential complex 100. However, the power distribution system or the protection method for a main line of the power distribution system of the present invention can be applied to another building other than the residential complex such as a rental housing and the like. For example, the present invention can be applied to a power distribution system for distributing electric power to each floor of a building via a main line which is wired to pass through each section in the floor of the building.

While the invention has been described with respect to the embodiments, the present invention is not limited to the above embodiments and can be variously modified and changed without departing from the scope of the invention as defined in the following claims, and such changes and modifications are also included in the scope of the present invention.

## Claims

1. A power distribution system for a building, comprising:
an electric current sensor for detecting a current value of an electric current flowing from a commercial AC power source through a main line in a building; and
a storage battery installed at the building,
wherein when the current value detected by the electric current sensor reaches a predetermined value, a supply of an electric power to the building from the storage battery is initiated.

2. The power distribution system of claim 1, further comprising an overcurrent protection unit, wherein the building includes a plurality of sections individually equipped with electric power supply systems, and the overcurrent protection unit protects the main line of the building from an overcurrent by initiating the supply of the electric power from the storage battery to the building when the current value detected by the electric current sensor becomes equal to or greater than a predetermined current value for the initiation of main line protection.

3. The power distribution system of claim 2, wherein the storage battery is provided at a side of the main line which is opposite to a side where the commercial AC power source is provided, and the overcurrent protection unit initiates the supply of the electric power from the storage battery to the building.

4. The power distribution system of claim 2, wherein the storage battery is provided at each of the sections, and the overcurrent protection unit initiates the supply of the electric power from the storage battery to the main line in the building.

5. The power distribution system of any one of claims 2 to 4, further comprising: a storage battery current sensor for detecting a current value of an electric current supplied from the storage battery; and a release unit for stopping the supply of the electric power from the storage battery which is carried out by the overcurrent protection unit when the sum of the current values detected by the electric current sensor and the storage battery current sensor becomes equal to or lower than a predetermined current value for the release of main line protection.

6. The power distribution system of claim 5, wherein the current value for the release of the main line protection is set to be different by a predetermined constant value from the current value for the initiation of the main line protection.

7. A method for protecting a main line of a building from an overcurrent in a power distribution system for distributing an electric power to each floor of the building via the main line which is wired to pass through each floor of the building, the method comprising:
detecting a current value of an electric current flowing from a commercial power source through the main line; and
initiating a supply of an electric power to the building from a storage battery installed at the building when the detected current value becomes equal to or greater than a predetermined current value for the initiation of main line protection.
